# EUROPEAN PATENT APPLICATION

(11) **EP 1 348 368 A1**
(43) Date of publication of application: **01.10.2003**
(21) Application number: 03013546.1
(22) Date of filing: 03.04.2002
(51) Int. Cl.: A47J 39/00, A47F 10/00

(54) **Modular cooking system**

(30) Priority: 30.04.2001 DE 10121213
(62) Divisional of application: 02009785.3
(71) Applicant: Rational AG, 86899 Landsberg/Lech (DE); FRIMA S.A., 68271 Wittenheim Cedex (FR)
(72) Inventor: Gluck, Pascal, 68100 Mulhouse (FR); Michineau, Serge, 68190 Ensisheim (FR); Wiedemann, Peter, 86836 Klosterlechfeld (DE); Wagner, Stefan, 68127 Oberhergheim (FR)
(74) Representative: Weber-Bruls, Dorothée, Dr.

(57) **Zusammenfassung**

Garmodulsystem mit einer Vielzahl von Garmodulen, umfassend eine Halterung, an der die Garmodule anbringbar sind, dadurch gekennzeichnet, daß die Halterung einen insbesondere säulenartigen Träger umfaßt, an dem die Garmodule frei zugänglich anbringbar sind, wobei Speisen in den Garmodulen garbar, lagerbar, kühlbar, transportierbar und/oder regenerierbar sind, und zumindest eine Steuer- und/oder Regeleinheit vorgesehen ist, die mit den Garmodulen (20-25, 120-123) in Wirkverbindung bringbar ist.

## Description

Die Erfindung betrifft ein Garmodulsystem mit einer Vielzahl von Garmodulen, umfassend eine Halterung, an der die Garmodule lösbar anbringbar sind.

Es ist eine Vielzahl unterschiedlicher Garmodule im Stand der Technik bekannt, in denen Speisen garbar, lagerbar, kühlbar, transportierbar oder regenerierbar sind. Aufgrund der unterschiedlichen Anforderungen an die Behandlung von Speisen sind in herkömmlichen Großküchen eine Vielzahl von unterschiedlichen Gargeräten angeordnet. So finden sich in einer Großküche heutzutage zumindest ein sogenannter Kombidämpfer, bei dem mit Heißluft und/oder Dampf gearbeitet wird, eine Friteuse, eine Grillplatte, eine Kochstelle für Rührgut, ein Mikrowellenofen, ein Kühlschrank und eine Vielzahl von Lagerregalen, mehr oder weniger unabhängig voneinander. Solch eine Anordnung einer Vielzahl von unterschiedlichen Garmodulen fordert einen großen Platz und erschwert einem Koch die Koordinierung bei der Zubereitung einer Vielzahl von Speisen.

Ein Hintereinander-Anordnen von Garmodulen, entlang eines Förderbandes, zum schrittweisen Behandeln bzw. Garen von Speisen ist im Stand der Technik gut bekannt, siehe, zum Beispiel, US 5,826,496.

Aus der DE 299 11 846 U1 ist eine Vorrichtung zur Ausgabe, Zubereitung und Präsentation von Speisen und Getränken mit Aufnahmemöglichkeiten von Funktionsmodulen, wie z.B. Kochgeräten oder Essensbehältern, bekannt. Die Aufnahmemöglichkeiten werden dabei von horizontal oder vertikal verstellbaren Platten dargeboten, die zudem als Arbeitsplatten Verwendung finden und/oder beheizbar bzw. kühlbar sein. Die Vorrichtung kann mobil und optional mit einer Dunstabzugshaube ausgeführt sein.

In der DE 33 39 612 A1 wird ein Mehrzweckofen mit mindestens einem Brenner für vorwiegend gastronomische Zwecke offenbart, der eine Vielzahl von Garprozessen, wie z.B. Kochen, Backen und/oder Räuchern, erlaubt. Hierzu sind im Ofen drehbare Kränze angeordnet, die entweder eine Platte zum Garen von Speisen oder eine Räucherkammer beherbergen. Wahlweise kann ein Grillrost installiert werden, oder die Kränze können mit einer Abdeckung versehen werden, um dem Entweichen der Hitze entgegenzuwirken.

Der US 3,797,375 ist ein Ofen bzw. Herd zu entnehmen, der in seiner Oberseite zumindest eine wannenförmige Vertiefung zur Aufnahme von einer Vielzahl von austauschbaren Kochutensilien, wie z.B. Grillrost, Drehspieß, Kuchenblech, Kochplatte usw., sowie Heizelementen aufweist. Zudem weist der Ofen bzw. Herd eine Absaugvorrichtung für entstandene Frasen sowie zur Bereitstellung einer erzwungenen Luftströmung zwecks Abführung überschüssiger Hitze auf.

Aus der US 3,902,773 ist eine Archivierungsvorrichtung für Gegenstände, wie z.B. Büroakten, in Form eines Lagerschranks bekannt, in dem mehrere Ablagefächer für Gegenstände in Speicherzellen angeordnet sind. Diese Ablagefächer sind über einen Kettenantrieb auf Höhe eines Arbeitstisches fahrbar, wo die Ablagefächer über eine geeignete Auszieheinrichtung aus den Speicherzellen gezogen und auf dem Arbeitstisch zugänglich dargeboten werden.

Allgemein nachteilig ist dem vorab beschriebenen Stand der Technik, daß entweder ein erhöhter Platzbedarf von Nöten ist oder aber kein ergonomisches Arbeiten für eine Vielzahl von zu überwachenden Garprozessen gewährleistet wird.

Aus der WO 00/76383 A1 ist ein Systemträger zur Aufnahme von zumindest einem Behälter und/oder zumindest einem als einsetz- oder einschiebbares Elektrogerät konzipierten Koch-, Warmhalte- oder Kühlgeräts, das in dem Systemträger in wählbarer Höhe anbringbar ist und über eine Steckvorrichtung an einer Elektroinstallation anschließbar ist, die wiederum zur Stromversorgung des Elektrogeräts an das Stromnetz anschließbar ist, bekannt. Nachteilig dabei ist, daß ausschließlich beim Anschließen eines Elektrogerätes an den bekannten Systemträger die Höhe wählbar ist, jedoch nach Anbringung eine Veränderung der Höhe, insbesondere in Abhängigkeit vom Garverlauf, nicht mehr möglich ist. Zudem wird lediglich ein Freiheitsgrad bei Anbringung an den Systemträger pro Elektrogerät zur Verfügung gestellt, was den Einsatzbereich erheblich beschränkt.

Aufgabe der vorliegenden Erfindung ist es daher, das gattungsgemäße Garmodulsystem mit einer Vielzahl von Garmodulen, insbesondere mit wenigstens zwei Garmodulen, derart weiterzuentwickeln, daß es die Nachteile des Stands der Technik überwindet, insbesondere auf platzsparende Weise einen übersichtlichen, an die jeweils zuzubereitenden Speisen beim Zubereiten derselben anpaßbaren Aufbau liefert, der einem Koch die Arbeit erleichtert.

Diese Aufgabe wird dadurch gelöst, daß die Halterung einen insbesondere säulenartigen Träger umfaßt, an dem die Garmodule frei zugänglich anbringbar sind, wobei Speisen in den Garmodulen garbar, lagerbar, kühlbar, transportierbar und/oder regenerierbar sind und zumindest eine Steuer- und/oder Regeleinheit vorgesehen ist, die mit den wenigstens zwei Garmodulen in Wirkverbindung bringbar ist.

Dabei ist bevorzugt vorgesehen, daß wenigstens zwei Garmodule vorgesehen werden, die zumindest teilweise übereinander, nebeneinander und/oder hintereinander angeordnet sind, wobei insbesondere jeweils zumindest ein Garmodul, vorzugsweise zwei Garmodule, in ergonomischer Arbeitshöhe für eine Bedienperson angeordnet ist.

Vorzugsweise ist die Steuer- und/oder Regeleinheit in der Säule integriert und in einer bevorzugten Ausführung sind die wenigstens zwei Garmodule von der Einheit separat ansteuerbar.

Zudem kann ein erfindungsgemäßes Garmodulsystem dadurch gekennzeichnet sein, daß die Garmodule längst zumindest zweier Seiten des Trägers anbringbar sind.

Ferner wird mit der Erfindung vorgeschlagen, daß die Halterung fahrbar, auseinander fahrbar und/oder auseinander klappbar ist, wobei insbesondere die Säule teleskopartig ausgeformt ist.

Ausführungsformen der Erfindung können gekennzeichnet sein durch zumindest eine Abzugshaube, verbunden mit oder integriert in die Halterung.

Auch kann erfindungsgemäß vorgesehen sein, daß die wenigstens zwei Garmodule relativ zum Träger verfahrbar und/oder verschwenkbar sind, wobei insbesondere jedes Garmodul über zumindest eine Einrastverbindung, zumindest eine Klippverbindung, zumindest eine Steckverbindung, zumindest eine Schiene, zumindest einen Gelenkarm, zumindest eine Gewindespindel und/oder zumindest eine Feder mit der Halterung, insbesondere einer Führung an der Halterung, vorzugsweise verriegelbar, verbindbar ist.

Erfindungsgemäße Ausführungsformen können auch dadurch gekennzeichnet sein, daß zumindest ein Teil der Garmodule jeweils einen Deckel aufweist, der vorzugsweise durch Verschieben oder Verfahren entlang der Halterung öffenbar bzw. schließbar ist.

Ferner wird erfindungsgemäß vorgeschlagen, daß zumindest ein Anschluß für eine Wasserleitung, Gasleitung, Stromleitung, Datenleitung und/oder Telefonleitung an der Halterung vorzugsweise der Säule, vorzusehen.

Dabei kann vorgesehen sein, daß zumindest ein Teil der Garmodule beim Anbringen an die Halterung automatisch mit zumindest einem Anschluß in Wirkverbindung kommen.

Schließlich sind bevorzugte erfindungsgemäße Ausführungsformen gekennzeichnet durch zumindest eine Bedienleiste, zumindest eine Anzeigeeinheit, zumindest eine Eingabeeinheit und/oder zumindest eine Ausgabeeinheit, vorzugsweise integriert in die Säule und mit jedem Garmodul in Wirkverbindung bringbar.

Der Erfindung liegt somit die Erkenntnis zugrunde, daß wenigstens zwei Garmodule, insbesondere eine Vielzahl von Garmodulen, wahlweise an eine Halterung in übersichtlicher, platzsparender und für einen Koch freizugänglicher Weise lösbar anbringbar ist, nach Art eines Baukasten-Prinzips. Somit ist sichergestellt, daß die Garmodule in Anpassung an die jeweiligen Bedürfnisse einer Speisenproduktion beliebig zusammenstellbar und an eine Halterung andockbar sind. Zudem kann der jeweils von einem Koch zu bedienende Garmodul auf eine ergonomische Arbeitshöhe für den Koch gebracht werden, was nicht nur die körperliche Belastung des Kochs reduziert, sondern auch Arbeitszeit einspart. Die Garmodule können dabei speziell für eine Garaufgabe ausgebildet oder multifunktional für unterschiedliche Garaufgaben verwendbar sein. Nach dem Garen können die Speisen in den Garmodulen gelagert, gekühlt, transportiert oder regeneriert werden, ohne daß das Gargut den Garmodul verlassen muß, da die Garmodule wunschweise über die Halterung bewegbar sowie von der Halterung abdockbar sind. Bei Nichtgebrauch eines Garmodules kann dasselbe abgestellt werden. Mit der mit den insbesondere wenigstens zwei Garmodulen betriebsmäßig verbundenen Regeleinheit kann das Garen in den jeweiligen Garmodulen zentral kontrolliert und separat durchgeführt werden. Auf diese Weise gewährleistet das erfindungsgemäße Garmodulsystem ein Garen in Garmodulen, wobei die Garvorgänge gleichzeitig, platzsparend, übersichtlich, auf geeigneter ergonomischer Höhe für den Koch und von einer Regeleinheit kontrolliert stattfinden können.

Weitere Merkmale und Vorteile der Erfindung ergeben sich aus der nachfolgenden Beschreibung, in der zwei Ausführungsbeispiele der Erfindung anhand schematischer Zeichnungen beispielhaft erläutert sind. Dabei zeigt:
- Fig. 1: eine perspektivische Ansicht eines ersten erfindungsgemäßen Garmodulsystems; und
- Fig. 2: eine Vorderansicht eines zweiten erfindungsgemäßen Garmodulsystems.

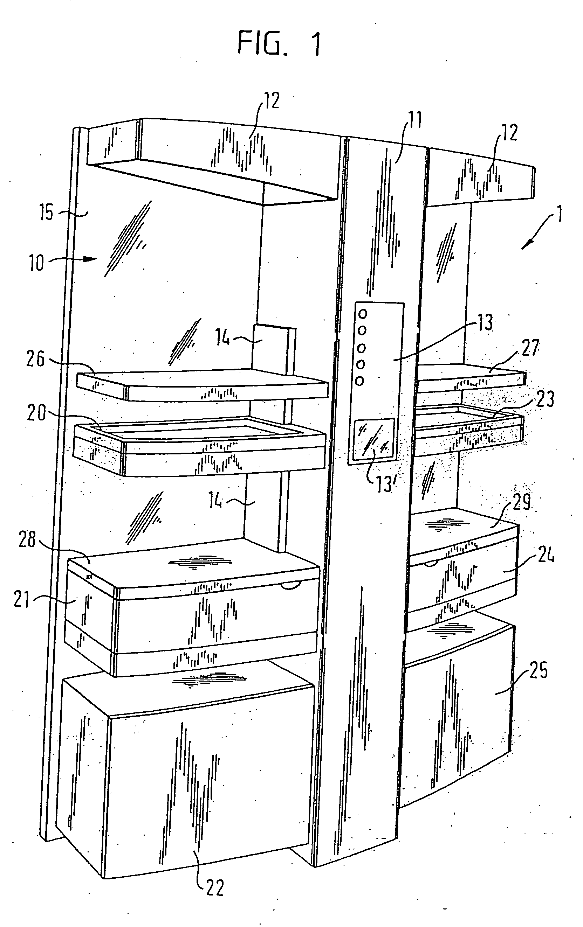

Wie der Figur 1 zu entnehmen ist, umfaßt ein erfindungsgemäßes Garmodulsystem 1 eine Halterung 10, die ihrereseits eine Säule 11 in Verbindung mit zwei Abzugshauben 12 am oberen Ende, nicht gezeigten Rollen am unteren Ende, einer Bedienleiste 13 und ein Display 13' in ihrer Mitte sowie Führungen 14 längs zweier Seitenwände und eine Rückwand 15 umfaßt. An die Halterung 10 sind über die Schienen 14 in ihrer Höhe verstellbar verschiedene Garmodule 20 - 25 andockbar. Bei den Garmodulen kann es sich, beispielsweise, um Grillplatten 20, 23, Friteusen 21, 24 und Lagerbehälter 22 und 25 handeln. Dabei sind die Grillplatten 20, 23 sowie Friteusen 21, 24 jeweils mit einem längs der Schienen 14 zum Öffnen und Schließen verfahrbaren Deckel 26 - 29 ausgerüstet.

Je nach Speisenproduktion können die Garmodule 20 - 25 auf einfache Weise ausgewechselt werden.

Die Garmodule 20 - 25 sind mit einer gemeinsamen, nicht gezeigten Regeleinheit verbunden, die ihrerseits wiederum mit der Bedienleiste 13 verbunden ist. So können über die Bedienleiste 13 Befehle an die verschiedenen Garmodule 20 - 25 weitergeleitet werden. Aber auch eine externe Regelung von Garabläufen durch Ansteuerung der Regeleinheit über eine nicht gezeigte Daten- und/oder Telefonleitung ist möglich.

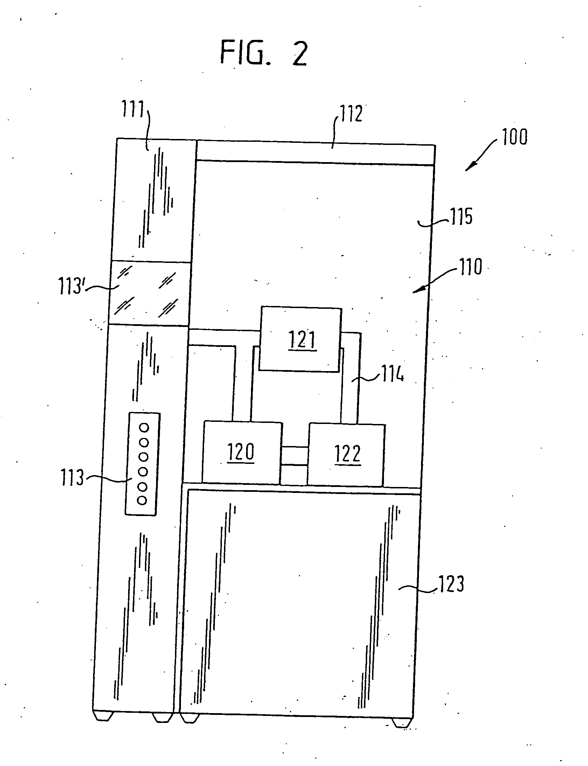

In Figur 2 ist ein weiteres erfindungsgemäßes Garmodulsystem 100 mit einer Halterung 110 dargestellt, die eine Säule 111 mit einer Abzugshaube 112, einer Bedienleiste 113 sowie einem Display 113' aufweist. Mit der Säule 111 steht ferner eine Führung 114 vor einer Rückwand 115 in Wirkverbindung, an der Garmodule 120 - 122 oberhalb eines weiteren Garmoduls 123 verdrehbar angebracht sind.

Mit einem Aufbau gemäß Figur 2 ist es möglich, gleichzeitig drei Speisen in den Garmodulen 120 - 122 zuzubereiten, wobei das jeweils von einem Koch zu bedienende Garmodul 120 oder 122 in eine ergonomische Arbeitshöhe für den Koch über die Führung 14 nach Art eines Paternosters hineinfahrbar ist, während das weitere Garmodul 121 sich in einer Position befindet, in der ein Garen technisch möglich ist, aber die für den Koch ungünstig erreichbar ist. Die Bewegung der Garmodule 120 - 122 kann manuell, halb- oder vollautomatisch erfolgen.

Während des kompletten Garvorgangs kann über die Bedienleiste 113 das Garverfahren beeinflußt werden, beispielsweise in Abhängigkeit der Ausgabe des Displays 113'. Nach Abschluß des Garens in einem der drei Garbehälter 120 - 122 kann die entsprechend fertig gegarte Speise in den Garmodul 123 zum Warmhalten gelagert werden.

Den Figuren ist deutlich die Kompaktheit eines durch ein erfindungsgemäßes Garmodulsystem ermöglichten neuen Küchenkonzepts zu entnehmen, bei dem eine Vielzahl von Garmodulen, für einen Koch frei zugänglich, auf kleinstem Raum, beliebig variierbar, auch noch beim Garen bewegbar, anordbar ist.

Die in der vorstehenden Beschreibung, den Ansprüchen sowie den Zeichnungen offenbarten Merkmale der Erfindung können sowohl einzeln als auch in jeder beliebigen Form für die Verwirklichung der Erfindung in ihren verschiedenen Ausführungsformen wesentlich sein.

### Bezugszeichenliste

- 1: Garmodulsystem
- 10: Halterung
- 11: Säule
- 12: Abzugshaube
- 13: Bedienleiste
- 13': Display
- 14: Führung
- 15: Rückwand
- 20 - 25: Garmodul
- 26 - 29: Deckel

- 100: Garmodulsystem
- 110: Halterung
- 111: Säule
- 112: Abzugshaube
- 113: Bedienleiste
- 113': Display
- 114: Führung
- 115: Rückwand
- 120 - 123: Garmodul

## Patentansprüche

1. Garmodulsystem (1; 100) mit einer Vielzahl von Garmodulen (20-25; 120-123), umfassend
eine Halterung (10; 110), an der die Garmodule (20-25; 120-123) lösbar anbringbar sind, **dadurch gekennzeichnet, daß**
die Halterung (10; 100) einen insbesondere säulenartigen Träger (11; 111) umfaßt, an dem die Garmodule (20-25; 120-123) frei zugänglich anbringbar sind, wobei Speisen in den Garmodulen (20-25; 120-123) garbar, lagerbar, kühlbar, transportierbar und/oder regenerierbar sind,
und zumindest eine Steuer- und/oder Regeleinheit vorgesehen ist, die mit den Garmodulen (20-25, 120-123) in Wirkverbindung bringbar ist.

2. Garmodulsystem nach Anspruch 1, **dadurch gekennzeichnet, daß**
wenigstens zwei Garmodule vorgesehen sind, die vorzugsweise zumindest teilweise übereinander, nebeneinander und/oder hintereinander angeordnet sind, wobei insbesondere jeweils zumindest ein Garmodul (20, 23; 120, 122), vorzugsweise zwei Garmodule (20, 23), in ergonomischer Arbeitshöhe für eine Bedienperson angeordnet ist.

3. Garmodulsystem nach Anspruch 1 oder 2, **dadurch gekennzeichnet, daß**
die Steuer- und/oder Regeleinheit in der Säule (11, 111) integriert ist und vorzugsweise die wenigstens zwei Garmodule von der Steuer- und/oder Regeleinheit separat ansteuerbar sind.

4. Garmodulsystem nach einem der vorangehenden Ansprüche, **dadurch gekennzeichnet, daß**
die Garmodule (20-25) längst zumindest zweier Seiten des Trägers (11) anbringbar sind.

5. Garmodulsystem nach einem der vorangehenden Ansprüche, **dadurch gekennzeichnet, daß**
die Halterung (10; 110) verfahrbar, auseinander fahrbar und/oder auseinander klappbar ist, wobei insbesondere die Säule teleskopartig ausgeformt ist.

6. Garmodulsystem nach einem der vorangehenden Ansprüche, **gekennzeichnet durch** zumindest eine Abzugshaube (12; 112), verbunden mit oder integriert in die Halterung (10; 110).

7. Garmodulsystem nach einem der vorangehenden Ansprüche, **dadurch gekennzeichnet, daß**
die wenigstens zwei Garmodule (20-25, 120-123) relativ zu dem Träger verfahrbar und/oder verschwenkbar und/oder verdrehbar sind, wobei insbesondere jedes Garmodul (20-25; 120-123) über zumindest eine Einrastverbindung, zumindest eine Klippverbindung, zumindest eine Steckverbindung, zumindest eine Schiene, zumindest einen Gelenkarm, zumindest eine Gewindespindel und/oder zumindest eine Feder mit der Halterung (10; 110), insbesondere einer Führung (14; 114) an der Halterung (10; 110), vorzugsweise verriegelbar, verbindbar ist.

8. Garmodulsystem nach einem der vorangehenden Ansprüche, **dadurch gekennzeichnet, daß**
zumindest ein Teil der Garmodule (20, 21, 23, 24) jeweils einen Deckel (26-29) aufweist, der vorzugsweise durch Verschieben oder Verfahren entlang der Halterung (10) öffenbar bzw. schließbar ist.

9. Garmodulsystem nach einem der vorangehenden Ansprüche, **gekennzeichnet durch** zumindest einen Anschluß für eine Wasserleitung, Gasleitung, Stromleitung, Datenleitung und/oder Telefonleitung an der Halterung (10; 110), vorzugsweise der Säule (11; 111).

10. Garmodulsystem nach Anspruch 9, dadurch gekennezeichnet, daß
zumindest ein Teil der Garmodule beim Anbringen an die Halterung automatisch mit zumindest einem Anschluß in Wirkverbindung kommt.

11. Garmodulsystem nach einem der vorangehenden Ansprüche, **gekennzeichnet durch** zumindest eine Bedienleiste (13; 113), zumindest eine Anzeigeeinheit (13', 113'), zumindest eine Eingabeeinheit und/oder zumindest eine Ausgabeeinheit, vorzugsweise integriert in die Säule (11; 111) und mit jedem Garmodul (20-25; 120-123) in Wirkverbindung bringbar.
